(19)

Europäisches
Patentamt
European
Patent Office
Office européen
des brevets

(11) **EP 2 219 363 A1**

(12) **EUROPEAN PATENT APPLICATION**

(43) Date of publication:
**18.08.2010 Bulletin 2010/33**

(51) Int Cl.:
***H04N 1/58*** *(2006.01)*

(21) Application number: **09152763.0**

(22) Date of filing: **13.02.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(71) Applicant: **Océ-Technologies B.V.**<br>**5914 CC  Venlo (NL)** | (72) Inventor: **The designation of the inventor has not yet been filed**<br><br>(74) Representative: **van de Sande, Jacobus**<br>**Océ-Technologies B.V.**<br>**Corporate Patents**<br>**Postbus 101**<br>**5900 MA Venlo (NL)** |

(54) **Digital image processing system and method**

(57)     An image processing system for an image processing apparatus is described. The image processing system is arranged to enhance the quality of a scanned image by processing the scanned image data. As the scanned image data comprises artefacts that could be enlarged by the processing, the image enhancement process is only applied to the luminance data of the scanned image data. By doing so, the occurrence of colour cast may, at least partly, be avoided.

Figure 4a

EP 2 219 363 A1

**Description**

FIELD OF THE INVENTION

The present invention relates to an image processing system for processing a digital image, the system e.g. comprising a scanner or a printer. The present invention also relates to an image processing method of processing digital images such as scanned images.

BACKGROUND OF THE INVENTION

Image processing systems as known in the art are widely applied to produce high quality copies of scanned images. As such, an image processing system may include a scanning unit for scanning an image thereby obtaining e.g. a digital representation of the image, e.g. a pixel-based representation of the scanned image, each pixel being described as a combination of RED, GREEN and BLUE, each e.g. having a specific intensity. Such a representation is also referred to as a representation in the RGB colour space. Other colour spaces such as CMYK are also known for representing the colour associated with a pixel of a digitised image. In order to scan the image, an image processing apparatus may e.g. comprise a charge coupled device (CCD), comprising a plurality of light-sensitive elements or photo-cells. Image processing systems may further comprise a printing unit for providing a copy of the scanned digital image.
In general, an image processing system is further arranged to process the scanned image prior to the printing process. The purpose of such processing is to provide an image having a desired quality. Known processing steps e.g. include background reduction or contrast enhancement. The image processing system may also be arranged to convert a scanned image from one colour space to an other. Such a conversion may e.g. be required when the colour space of the scanning unit (e.g. RGB) is different from the available colours in the printing unit.
The raw digital image as obtained from the scanner may comprise artefacts due to e.g. registration errors or chromatic aberrations. It has been observed that the application of conventional image enhancement steps as mentioned to the raw image (e.g. in the RGB or CMYK domain), may also result in an enhancement of the artefacts. As a result, the enhanced artefacts may become visible in the processed image. When viewed from a distance, the enhanced artefacts can be seen as a colour cast. In particular, when image enhancement techniques such as edge enhancement or sharpening are applied to the raw image data in e.g. the RGB or CMYK domain, a colour cast can be observed in the resulting modified image.

SUMMARY OF THE INVENTION

In view of the above, it is an object of the present invention to provide an image processing system that enables an image enhancement of a scanned image, substantially without enhancing artefacts present on the scanned digital image.
To address this object, an image processing system for processing a digital image is provided, the image processing system comprising:

- an input module for receiving the digital image, the digital image comprising luminance image data and chrominance image data,
- an image enhancement module for generating modified luminance image data by applying an image enhancement method to the luminance image data only and
- a conversion module for converting the modified luminance image data to an output digital image.

When known image enhancement methods are applied to a digital image (the digital image e.g. being described as a matrix of pixels defined by a luminance and a chrominance value) as e.g. obtained from a scanner, a colour cast can sometimes be observed in the resulting enhanced image. A digital image can e.g. contain, on a pixel level certain inaccuracies, also referred to as artefacts. By the application of the image enhancement method, the artefacts present in the digital image data may be enhanced as well.
In order to avoid the enhancement of the artefacts that can be present in the digital image, the present invention provides an image processing system arranged to perform a number of processing steps to the digital image. To perform the processing steps, the image processing system according to the invention comprises a number of modules, which can e.g. be implemented in software, for performing the processing steps.
As such, the image processing system comprises an input module for receiving the digital image, such digital image in general comprising luminance image data and chrominance image data.
When the digital image is received by the image processing system, an image enhancement method is applied by an image enhancement module of the system to the luminance image data only. It has been devised by the inventors that an image enhancement of a digital image may equally be obtained by performing the enhancement methods only on the luminance information of the digital image. This is based on the insight that the human vision system is more sensitive to luminance variations with a high spatial frequency than to chrominance variations with a high spatial frequency. Phrased differently, in order to give the impression of a sharp image, i.e. having a high contrast, it has been found that it is sufficient to enhance only the high spatial frequencies of the luminance image data of a digital image.

Therefore, the image processing system according to the present invention is arranged to apply an image enhancement method to the luminance image data comprised in the digital image only, thereby obtaining modified luminance image data. In order to address only the luminance data of the digital image, it may be required to convert the digital image as received to a separate luminance image and a chrominance image. By applying the image enhancement method to the luminance image data only, the chrominance image data remains unaffected.

The image processing system according to the invention further comprises a conversion module for converting the modified luminance image data to an output digital image. This can e.g. be done by combining the modified luminance image data with the chrominance image data of the digital image for colour output or by applying the modified luminance data only for greyscale or black and white output.

When the modified image data is applied to produce an output digital image, the output digital image may have the desired image enhancement (e.g. contrast enhancement and/or sharpening) without producing a colour cast due to the artefacts that may be present in the original image data.

The modified image data can, in an embodiment of the image processing system according to the invention, be converted to a suitable colour space for processing by e.g. a printing unit.

Within the meaning of the present invention, image enhancement methods include image sharpening methods or edge enhancement methods. Such image enhancement methods can be characterised as an enforcement of the high spatial frequency content of the digital image, relative to the low spatial frequency content. Such enforcement of the high spatial frequency content relative to the low spatial frequency content (further on also referred to as high pass filtering) can be realised in different ways, as is explained in more detail below. As such, image enhancement methods as applied in the present invention are distinct from low pass filtering methods that may enable an attenuation of the low frequency spatial content of an image.

According to the invention, the presence of artefacts may be further reduced by applying a low pass filtering to the chrominance image data thus obtaining a modified chrominance image data. Therefore, in an embodiment, the image processing system according to the invention comprises a low pass filtering module for generating modified chrominance image data by applying a low pass filtering to the chrominance image data.

In such an embodiment, the conversion module can further be arranged to convert the modified chrominance date to the output digital image.

As this low pass filtering is performed on the chrominance image data only, the reduction of the artefacts can be achieved without noticeably affecting the contrast of an output digital image obtained from the modified luminance image data and the modified chrominance image data. This is due to the fact that the contrast of an image as perceived by the human eye is mainly determined by the luminance information of the image, rather than by the chrominance information. As the low pass filtering is only applied to the chrominance image data and not to the luminance image data, the contrast of the output digital image is hardly affected by the filtering. Such low pass filtering may e.g. advantageously be applied to reduce artefacts such as coloured noise appearing on the digital image.

In a further aspect, the present invention provides an image processing method of processing a digital image, the method comprising the steps of

- receiving a digital image comprising luminance image data and chrominance image data,
- generating modified luminance image data by applying an image enhancement method to the luminance image data only and,
- converting the modified luminance image data to an output digital image.

The image processing method according to the invention provides for a way to enhance a digital image substantially without enhancing artefacts present in the digital image. The image processing method according to the invention can e.g. be implemented in software, i.e. as a computer program arranged to perform the steps of the image processing method on the original image data. As such, the invention further provides a data carrier (e.g. a disk such as a CD-ROM or a hard-disk or a memory unit such as a USB memory stick or a data carrier signal transmitted over a wired or wireless data transmission connection) comprising such a computer program.

It should be noted that image enhancement methods as applied in the image processing system or the image processing method according to the invention should not be confused with background reduction methods as known in the art. In general, background (or background colour) refers to the appearance (colour) of the medium that contains the image that is scanned. The image that is being scanned can e.g. be present on a white or grey or coloured sheet of paper. Background reduction methods thus focus on detecting a background colour of a scanned image and converting or removing this colour (e.g. by setting the background colour to white). As an example, the detection and removal of background on an image is known from US 7,085,413. The method as described involves determining a dominant colour (i.e. the background colour) and a threshold luminance to compare the luminance of the dominant colour with. If the luminance value of the dominant colour is higher than the threshold value, the dominant colour can e.g. be set to white or any other required background colour. As will be acknowledged by the skilled person, the application of such background reduction methods does not result in an increase of artefacts present on the digital image. In contrast herewith it is the case that image enhancement methods such as sharpening or edge enhancement may increase the occurring artefacts, as such methods mainly process the high frequency spatial content of an image.

In the following, various aspects and features of the invention will be explained in more detail, with reference to the following figures.

BRIEF DESCRIPTION OF THE DRAWINGS

Figure 1 schematically depicts a first embodiment of an image processing system according to the present invention.
Figure 2 schematically depicts a control unit of an image processing system.
Figure 3a schematically depicts a second embodiment of an image processing system according to the present invention.
Figure 3b schematically depicts a flow chart describing the different processing steps as can be performed by the second embodiment of the image processing system according to the present invention.
Figure 4a schematically depicts a third embodiment of an image processing system according to the present invention.
Figure 4b schematically depicts a second flow chart describing the different processing steps as can be performed by the third embodiment of the image processing system according to the present invention.

DETAILED DESCRIPTION OF EMBODIMENTS

The present invention relates to an image processing system arranged to enhance the quality of a digital image by performing a number of processing steps to the image.

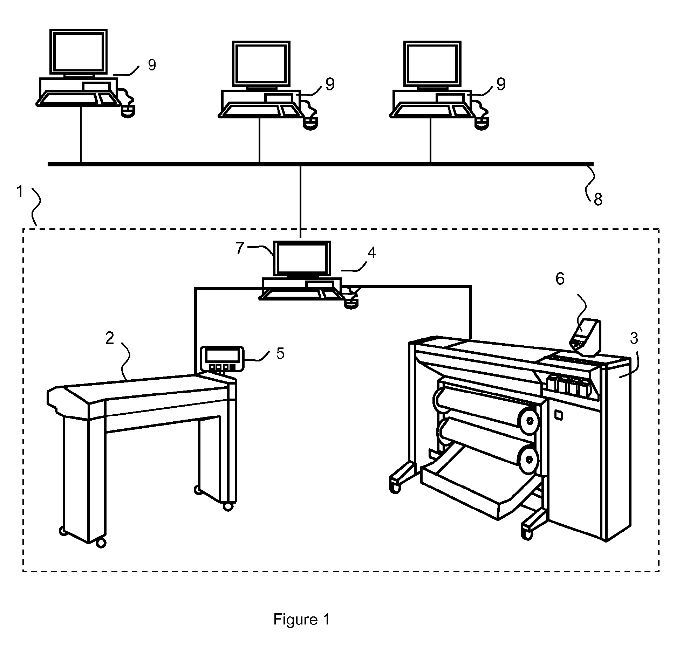

An embodiment of the image processing system according to the invention is illustrated in Figure 1, Figure 1 schematically depicts an image processing system 1 comprising a scanning unit 2, a printing unit 3 and a control unit 4.

The scanning unit 2 is provided for scanning an original colour document supported on a support material. The scanning unit can e.g. be provided with a CCD type colour image sensor (i.e. a photoelectric conversion device) which converts the reflected light into electric signals corresponding to the primary colours red (R), green (G) and blue (B). A local user interface panel 5 is provided for starting scan and copy operations.

The printing unit 3 is provided for printing digital images on image supports. The printing unit may use any number of printing techniques. It may be a thermal or piezoelectric inkjet printer, a pen plotter, or a press system based on organic photoconductor technology, for instance. In the example shown in Figure. 1, printing is achieved using a wide format inkjet printer provided with four different basic inks, such as cyan, magenta, yellow and black. The housing contains a print head which is mounted on a carriage for printing swaths of images. The images are printed on an ink receiving medium such as a sheet of paper supplied by a paper roll. A local user interface panel 6 is provided with input means such as buttons, and output means such as a display for selecting a user, a job and starting a printing operation etc.

The scanning unit 2 and the printing unit 3 are both connected to a control unit 4. The control unit 4 executes various tasks such as receiving input data from the scanning unit 2, handling and scheduling the submitted data files, controlling the scanning unit 2 and the printing unit 3, converting image data into printable data etc. The control unit 4 is provided with a user interface 7 for offering the operator an extensive menu of commands for executing tasks and making settings. The various modules of the image processing system according to the invention which are used for processing a digital image are implemented in the control unit 4. These modules, i.e. an input module, an image enhancement module, a low pass filtering module and a conversion module are discussed in more detail below.

Moreover, the control unit 4 is connected to a network 8 so that a number of client computers 9, also connected to the network, may use the reprographic system 1.

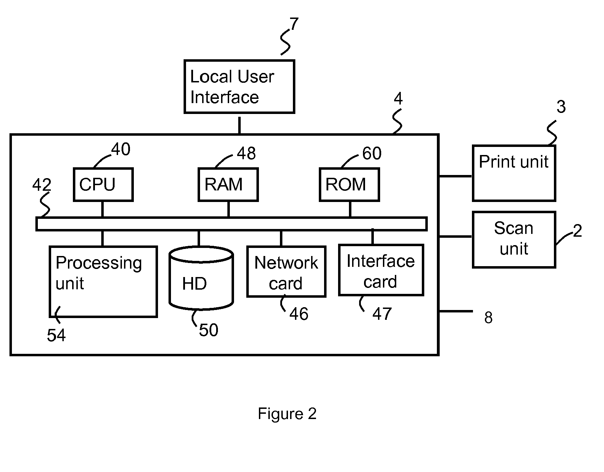

A possible arrangement of the control unit 4 is presented in more detail in Figure. 2. As shown in Figure 2, the control unit 4, as applied in the image processing system 1 comprises a Central Processing Unit (CPU) 40, a Random Access Memory (RAM) 48, a Read Only Memory (ROM) 60, a network card 46, an interface card 47, a hard disk (HD) 50 and a processing unit 54. The aforementioned units are interconnected through a bus system 42. The control unit is connected to a network 8.

The CPU 40 controls the respective units of the control unit 4, the local user interface 7, scanning unit 2 and the printing unit 3, in accordance with control programs stored on the ROM 60 or on the HD 50.

The ROM 60 stores programs and data such as boot program, set-up program, various set-up data or the like, which are to be read out and executed by the CPU 40.

The HD 50 is an example of a storage unit for storing and saving programs and data which make the CPU 40 execute a print process to be described later. The HD 50 also comprises an area for saving the data of externally submitted print jobs. The programs and data on the HD 50 are read out onto the RAM 48 by the CPU 40 as needed. The RAM 48 has an area for temporarily storing the programs and data read out from the ROM 60 and HD 50 by the CPU 40, and a work area which is used by the CPU 40 to execute various processes. Interface card 47 connects the control unit to scanning unit 2 and printing unit 3.

Network card 46 connects the control unit 4 to the network 8 and is designed to provide communication with the workstations 9, and with other devices reachable via the network.

The processing unit 54 may be implemented either as a software component of an operating system running on the control unit 52 or as a firmware program executed on the CPU 40. The processing unit 54 may include functions for reading, interpreting, processing and rasterizing the print job data. Said print job data may e.g. contain image data to be printed (i.e. fonts and graphics that describe the content of the document to be printed, described in a Page Description Language or the like), image processing attributes and print settings. The processing unit 54 further includes the various modules (i.e. the input module, the image enhancement module, the low pass filtering module and the conversion module) of the image processing system according to the invention which are used for processing a digital image.

Basic modes of operation for the image processing apparatus 1 can include scanning, copying and printing. With the electric signals corresponding to the primary colours red (R), green (G) and blue (B) obtained during scanning, a digital image is assembled in the form of a raster image file. A raster image file is generally defined to be a rectangular array of regularly sampled values, known as pixels. Each pixel (picture element) has one or more numbers associated with it, generally specifying a colour which the pixel should be displayed in. The representation of an image may have each pixel specified by three 8 bit (24 bits total) colorimetric values (ranging from 0-255) defining the amount of R, G, and B respectively in each pixel. In the right proportions, R, G, and B can be combined to form black, white, 254 shades of grey, and a vast array of colours (about 16 millions). The digital image obtained by the scanning unit 2 may be stored on a memory of the controller 6 and be handled according to a copy path, wherein the image is printed by the print engine 4. Alternatively, the digital image may be transferred from the controller to a client computer 9 (scan-to-file path). Finally a user of the client computer 9 may decide to print a digital image, which reflects the printing mode of operation of the system.

Various embodiments of the image processing system according to the invention, are described in further detail below.

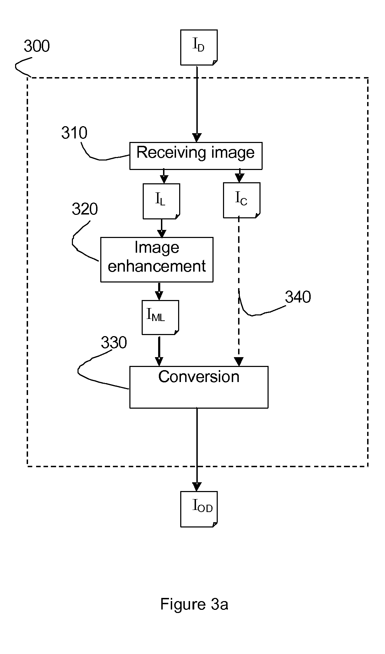

Figure 3a schematically depicts an embodiment of an image processing system 300 according to the present invention, the image processing system 300 comprising modules 310, 320 and 330. The modules may be embodied as software components running under a certain operating system on a computer or they may be embodied in hardware as dedicated circuits like FPGAs or the like. Images going from one module to another are indicated as rectangles with a folded corner. In the following, an image is indicated by "I" and represents a set of image data.

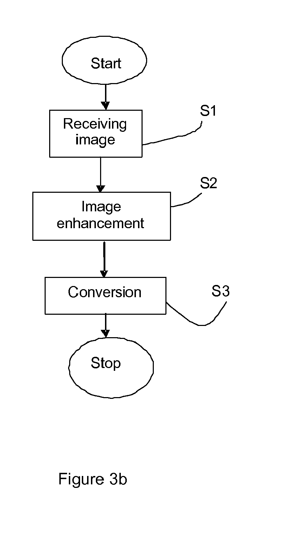

Figure 3b schematically provides a flow diagram representing an embodiment of the image processing method according to the invention. Figures 3a and 3b are related in the sense that typically a particular component (as illustrated in Figure 3a) is arranged to carry out a particular step of the method illustrated in Figure 3b.

In a first step S1, as shown in Figure 3b, which, in the embodiment presented, is executed by input module 310 of Figure 3a, a digital image $I_D$ is received by the image processing system 300. The image will, in general, comprise luminance image data (providing information on the brightness of the image), represented by the luminance image $I_L$, and chrominance image data (providing information on the colour of the image), represented by the chrominance image $I_C$. Depending on the format in which the digital image $I_D$ is provided to the image processing system, the digital image $I_D$ needs to be converted to separate the luminance image data and the chrominance image data, thereby forming a luminance image $I_L$ and a chrominance image $I_C$. It is noted that such processing of the digital image $I_D$ towards luminance image data and chrominance image data can be done in various colour spaces, such as Lab, LCH, IPT, YCbCr (also known as YCC), XYZ, etc, wherein Lab and LCH are expressions of the same colour space in Cartesian resp. polar co-ordinates.

In a next step S2, as shown in Figure 3b, executed by image enhancement module 320 of the image processing system as shown in Figure 3a, an image enhancement method is applied to the luminance image data only. Examples of such image enhancement methods are edge enhancement, contrast enhancement and sharpness enhancement. Such methods provide an enhancement of the high spatial frequency content of the digital image $I_D$. By enhancing the image content having a high spatial frequency, a "sharper" image can be obtained. Such enhancement of the high spatial frequency content of a scanned image can e.g. be obtained by appropriate filtering techniques of the digital image $I_D$, as illustrated below.

In accordance with the embodiment as shown, the image enhancement method is applied to the luminance image data only. The digital image $I_D$ can e.g. contain, on a pixel level certain inaccuracies, also referred to as artefacts. Such artefacts can e.g. be caused by registration errors in the scanning module or chromatic aberrations. Such artefacts may equally be caused by a difference in transfer function of the scanner between the scan-colours. The artefacts can e.g. be present in the digital images as coloured fringes.

When image enhancement algorithms or methods would be applied to the digital image data comprising such artefacts, these artefacts could be enhanced to such extend that they become visible when viewed from a distance. The phenomenon is known and generally referred to as colour cast. In order to avoid the enhancement of the artefacts that are present in the digital image, the image processing system according to the present invention is arranged to perform the image enhancement methods on the luminance information of the digital image only, thereby substantially avoiding the enhancement of the artefacts. It has been devised by the inventors that an image enhancement of a digital image may to a large extent also be obtained by performing the enhancement methods only on the luminance information of the raw image. This is based on the insight that the human vision system is more sensitive to luminance variations with a high spatial frequency than to chrominance variations with a high spatial frequency. So, in order to give the impression of a sharp image, i.e. having a high contrast, it is sufficient to enhance only the high spatial frequencies of the luminance of an image. Accordingly, by leaving the chrominance information as is, the artefacts are not affected. The artefacts as described above substantially present themselves as high spatial frequency components in the chrominance information of the digital image.

When an image enhancement method (e.g. arranged to enhance the high spatial frequencies by filtering) is applied only to the luminance image data, the high spatial frequency components in the chrominance image data are not enhanced. As such, the occurrence of a visible colour cast may, to a large extent, be avoided.

When the image enhancement method has been applied to the luminance image $I_L$, modified luminance image data, represented by a modified luminance image $I_{ML}$ is obtained, as shown in Figure 3a. In a next step S3, executed by output module 330 of the image processing system as shown in Figure 3a, the modified luminance image $I_{ML}$ is converted, optionally together with the chrominance image $I_C$ (indicated by the dotted line 340) to an output digital image $I_{OD}$. When converted without the chrominance image data, the modified luminance image $I_{ML}$ can directly be applied to generate a greyscale or black and white output digital image. Due to the selective application of the image enhancement method, the output digital image can result in the required contrast enhancement and sharpening without enhancing the artefacts present in the original digital image at pixel level.

In a preferred embodiment, the image processing system according to the invention is arranged to convert the output digital image to an output image in a colour space of an output unit such as a printer. Equally, the image processing system can be arranged to convert the output digital image to an image in a standard colour space such as sRGB or AdobeRGB. This output colour space may e.g. be different from the colour space of the digital image.

As an example of the image enhancement methods as can be applied by the image processing system according to the present invention, filtering can be applied to the luminance image $I_L$.

By filtering the scanned image data, one can, depending on the filter that is applied, e.g. sharpen an image or smoothen an image. In the former case, the high frequency spatial content of the image is lifted, in the latter case, the low frequency spatial content of the image is increased. Filtering an image (or in general, image data) thus offers the possibility of suppressing unwanted phenomena and / or enhancing the quality of desired phenomena, e.g. lines and text. Such filtering can be established by adjusting a pixel value (e.g. a luminance value) using the pixel values of pixels surrounding the pixel. As an example of such filtering, two-dimensional linear filtering can be applied. Two dimensional linear filtering is an operation wherein a pixel input value $pix_{in}(i,j)$ is replaced by a pixel output value $pix_{out}(i,j)$ that can be described as:

$$pix_{out}(i,j) = \sum_{k=-N}^{k=N} \sum_{l=-N}^{l=N} pix_{in}(i+k,j+l) * h(k,l) \tag{1}$$

Wherein N equals the order of the filter and h(k,l) is generally referred to as the impulse response of the filter.

As a first example of the impulse response of the filter h(k,l) may be equal to:

$$h(k,l) = \begin{bmatrix} 0 & -1 & 0 \\ -1 & 5 & -1 \\ 0 & -1 & 0 \end{bmatrix} \quad (2)$$

In this example, the filtering corresponds to a first order high-pass filter, meaning that high spatial frequencies are enhanced.

A second example of the impulse response of the filter h(k,l) is given by:

$$h(k,l) = \begin{bmatrix} 0 & 0 & -1 & 0 & 0 \\ 0 & 0 & 1 & 0 & 0 \\ -1 & 1 & 0 & 1 & -1 \\ 0 & 0 & 1 & 0 & 0 \\ 0 & 0 & -1 & 0 & 0 \end{bmatrix} \quad (3)$$

The impulse response according to equation (3) equally provides an high pass filter. Both examples given illustrate image enhancement methods as can be applied in an embodiment of the present invention to enhance the high spatial frequency content of the digital image.

By appropriate selection of the impulse response of the filter, equation (1) can be applied for low pass filtering as well.

As an example of such low pass filtering, the impulse response of the filter h(k,l) is equal to:

$$h(k,l) = \frac{1}{9} \begin{bmatrix} 1 & 1 & 1 \\ 1 & 1 & 1 \\ 1 & 1 & 1 \end{bmatrix} \quad (4)$$

Using equation (4) in equation (1), the filtering corresponds to a first order low-pass filter, meaning that high spatial frequencies are attenuated.

In order to adjust an image such that is perceived by human vision as sharper or having more contrast, the appropriate spatial frequencies need to be enhanced. Clearly, as the filtering involves adjusting pixel values based on neighbouring pixels, the actual resolution of the scanned image needs to be taken into account in order to obtain the required effect.

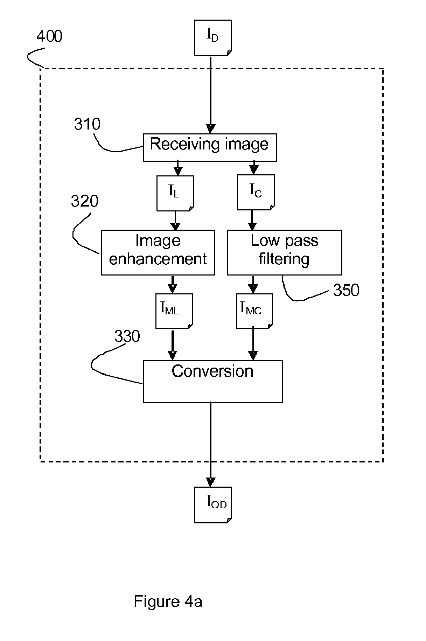

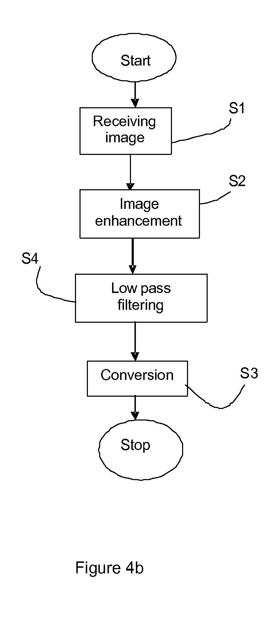

As illustrated by the examples of equations (1)-(4), filtering techniques can be applied to either enhance or attenuate the high frequency spatial content of the image data. In a preferred embodiment of the invention, illustrated by Figures 4a and 4b, a low-pass filtering is performed on the chrominance image data of a digital image. Figure 4a schematically depicts a further embodiment of an image processing system 400 according to the present invention, the image processing system 400 comprising modules 310, 320, 330 and 350. The modules may be embodied as software component running under a certain operating system on a computer or they may be embodied in hardware as dedicated circuits like FPGAs or the like. The embodiment of the image processing system as shown in Figure 4a substantially corresponds to the embodiment as shown in Figure 3a (indicated by the use of the same reference numbers for corresponding modules) apart from a low-pass filtering module 350 that enables the application of a low pass filtering to the chrominance image data, represented by the chrominance image $I_C$ of the digital image $I_D$. Figure 4b schematically provides a flow diagram representing a further embodiment of an image processing method according to the invention. The method as illustrated in Figure 4b substantially corresponds to the method as described by Figure 3b (indicated by the use of the same reference signs) apart from step S4 indicating the low pass filtering that is applied. The chrominance image $I_C$ of the digital image $I_D$ as indicated in Figure 4a is converted by a low pass filtering module 350 (step S4 in Figure 4b indicating the low pass filtering being executed), to modified chrominance image data, represented by the modified chrominance image $I_{MC}$ in Figure 4a. The modified chrominance image $I_{MC}$ can be combined with the modified luminance image $I_{ML}$ (obtained by applying an image enhancement method to the luminance image $I_L$ of the digital image $I_D$) to generate an output digital image $I_{OD}$. By doing so, the presence of artefacts can be mitigated. Artefacts present in the digital image (e.g. due to chromatic aberrations or a difference in transfer function of the scanner between the scan-colours) may e.g. be more pronounced in the chrominance information of the digital image compared to the luminance information. As such, performing a low pass filtering (e.g. a two-dimensional linear filtering as illustrated above) can result in a reduction of the artefacts noticed on an output digital image. As the sharpness or contrast of an image is mainly determined by the luminance information of the image, performing a low pass filtering on the chrominance information can be done without noticeable affecting the sharpness of the output image. Applying low pass filtering of the chrominance information may also diminish the effect of coloured noise pixels already present in the input image.

The image processing system according to the present invention can advantageously be applied in a scanner-printer apparatus. Such an apparatus may e.g. comprise a contact-type scanner or a reduction-type scanner for scanning an image and obtaining the digital image for processing by the image processing system.

According to the invention, an image processing system and an image processing method are described. The image processing system is arranged to enhance the quality of a digital image by processing the image data. As the image data comprises artefacts that could be enlarged by the processing, the image enhancement process is only applied to the luminance image data of the digital image. By doing so, the occurrence of colour cast may, at least partly, be avoided. Preferably, the image processing system is arranged to convert the modified luminance image data and the chrominance image data of the digital image or the modified chrominance image data to an output digital image, preferably in a suitable colour space for processing by e.g. a printing unit.

The image processing methods according to the invention can e.g. be implemented as a computer program arranged to perform the various steps of the methods on the original image date. The computer program can e.g. be made available through a data carrier (e.g. a disc such as a CD-ROM or a hard-disk or a memory unit such as a USB memory stick or a data carrier signal).

It can further be noted that the image enhancement methods as described, in particular, the two-dimensional filtering methods are merely intended to illustrate the invention and not to limit the invention to particular methods of image enhancement.

## Claims

1. An image processing system for processing a digital image, the image processing system comprising:

   - an input module for receiving the digital image, the digital image comprising luminance image data and chrominance image data,
   - an image enhancement module for generating modified luminance image data by applying an image enhancement method to the luminance image data only and
   - a conversion module for converting the modified luminance image data to an output digital image.

2. The image processing system according to claim 1, wherein the image enhancement module is arranged to apply a high pass filtering and wherein the image processing system further comprises

   - a low pass filtering module for generating modified chrominance image data by applying a low pass filtering to the chrominance image data and wherein the conversion module is further arranged to convert the modified chrominance image data to the output digital image.

3. The image processing system according to claim 1 or 2 wherein the digital image is in an RGB format, the input module further being arranged to convert the digital image to the luminance image data and the chrominance image data.

4. The image processing system according to claim 3 wherein the conversion module is further arranged to convert the modified luminance image data and the modified chrominance image data to the output digital image in a colour space of an output unit of the image processing system.

5. The image processing system according to claim 4 wherein the colour space is a CMYK or CMY colour space.

6. The image processing system according to any preceding claim wherein the image enhancement module is arranged to apply a high pass filtering to the luminance image data.

7. The image processing system according to claim 6 wherein the high pass filtering is a two-dimensional linear filtering.

8. The image processing system according to claim 2 wherein the low pass filtering is a two-dimensional linear filtering.

9. The image processing system according to any preceding claim further comprising a scanner, in particular a contact-type scanner, for scanning an original image and converting it to the digital image.

10. The image processing system according to any preceding claim, further comprising a printer for converting the output digital image to a printed image.

11. An image processing method of processing a digital image, the method comprising the steps of

- receiving a digital image comprising luminance image data and chrominance image data,
- generating modified luminance image data by applying an image enhancement method to the luminance image data only and,
- converting the modified luminance image data to an output digital image.

12. The image processing method according to claim 11 wherein the image enhancement method comprises a high pass filtering and wherein the method further comprises the steps of

- generating modified chrominance image data by applying a low pass filtering to the chrominance image data and
- converting the modified chrominance image data to the output digital image.

13. The image processing method according to claim 12 wherein the high pass filtering is a two-dimensional linear filtering.

14. The image processing method according to claim 12 or 13 wherein the low pass filtering is a two-dimensional linear filtering.

15. A computer program arranged to, when executed, perform the steps of the image processing method of any of the claims 11-14.

16. A data carrier comprising the computer program according to claim 15.

Figure 1

Figure 2

300

$I_D$

310

Receiving image

$I_L$   $I_C$

320

Image enhancement

$I_{ML}$

340

330

Conversion

$I_{OD}$

Figure 3a

Figure 3b

400

$I_D$

310  Receiving image

$I_L$        $I_C$

320  Image
     enhancement          Low pass
                          filtering

                          350

$I_{ML}$      $I_{MC}$

330  Conversion

$I_{OD}$

Figure 4a

Start

Receiving image — S1

Image enhancement — S2

S4 — Low pass filtering

Conversion — S3

Stop

Figure 4b

Europäisches
Patentamt

European
Patent Office

Office européen
des brevets

**EUROPEAN SEARCH REPORT**

Application Number

EP 09 15 2763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 377 386 A (EASTMAN KODAK CO [US]) 11 July 1990 (1990-07-11) | 1,3-7, 9-11 | INV. H04N1/58 |
| Y | * abstract; figure 3 * | 2,8,12, 13 | |
| | * column 4, line 40 - line 58 * | | |
| Y | AKIRA INOUE ET AL: "ADAPTIVE QUALITY IMPROVEMENT METHOD FOR COLOR IMAGES" NEC RESEARCH AND DEVELOPMENT, NIPPON ELECTRIC LTD. TOKYO, JP, vol. 35, no. 2, 1 April 1994 (1994-04-01), pages 180-186, XP000459703 ISSN: 0547-051X * page 183, left-hand column * | 2,8,12, 13 | |
| A | US 2003/052979 A1 (SOGA MINEKI [JP] ET AL) 20 March 2003 (2003-03-20) * paragraph [0006] - paragraph [0008]; figure 18 * | 1,6,11, 13 | |
| A | US 6 697 107 B1 (HAMILTON JR JOHN F [US] ET AL) 24 February 2004 (2004-02-24) * column 1, line 15 - line 55 * | 2,12 | TECHNICAL FIELDS SEARCHED (IPC) H04N |
| A | WO 2006/094265 A (TEXAS INSTRUMENTS INC [US]; KEMPF JEFFREY M [US]; HUTCHISON DAVID C [U) 8 September 2006 (2006-09-08) * abstract; figure 1 * | 1,11 | |

The present search report has been drawn up for all claims

| Place of search | Date of completion of the search | Examiner |
|---|---|---|
| Berlin | 8 July 2009 | Kassow, Harald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 15 2763

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2009

| Patent document cited in search report | | Publication date | Patent family member(s) | | Publication date |
|---|---|---|---|---|---|
| EP 0377386 | A | 11-07-1990 | DE<br>DE<br>JP<br>US | 68923949 D1<br>68923949 T2<br>2226375 A<br>5012333 A | 28-09-1995<br>18-04-1996<br>07-09-1990<br>30-04-1991 |
| US 2003052979 | A1 | 20-03-2003 | NONE | | |
| US 6697107 | B1 | 24-02-2004 | NONE | | |
| WO 2006094265 | A | 08-09-2006 | US | 2006204123 A1 | 14-09-2006 |

EPO FORM P0459

For more details about this annex : see Official Journal of the European Patent Office, No. 12/82

**REFERENCES CITED IN THE DESCRIPTION**

**Patent documents cited in the description**

- US 7085413 B